# EUROPÄISCHE PATENTSCHRIFT

(11) **EP 2 391 878 B1**
(45) Veröffentlichungstag und Bekanntmachung des Hinweises auf die Patenterteilung: **07.08.2019**
(21) Anmeldenummer: 10702861.5
(22) Anmeldetag: 01.02.2010
(51) Int. Cl.: G01N 15/06, G01M 15/10

(54) **VERFAHREN UND VORRICHTUNG ZUR MESSUNG DER RUSSBELADUNG IN ABGASSYSTEMEN VON DIESELMOTOREN**
METHOD AND DEVICE FOR MEASURING THE SOOT LOAD IN THE EXHAUST GAS SYSTEMS OF DIESEL ENGINES
PROCÉDÉ ET DISPOSITIF POUR MESURER LA CHARGE EN SUIES DANS DES SYSTÈMES D'ÉCHAPPEMENT DE MOTEURS DIESEL

(30) Priorität: 02.02.2009 DE 102009007126
(43) Veröffentlichungstag der Anmeldung: 07.12.2011
(73) Patentinhaber: Continental Automotive GmbH, 30165 Hannover (DE)
(72) Erfinder: ANTE, Johannes, 93055 Regensburg (DE); BIERL, Rudolf, 93055 Regensburg (DE); HEINRICH, Stephan, 84076 Pfeffenhausen (DE); HERRMANN, Markus, 93051 Regensburg (DE); OTT, Andreas, 93128 Steinsberg (DE); REITMEIER, Willibald, 93155 Hohenschambach (DE); SCHÄDLICH, Denny, 08223 Neustadt (DE); WEIGL, Manfred, 93161 Viehhausen (DE); WILDGEN, Andreas, 93152 Nittendorf (DE)
(86) Internationale Anmeldenummer: PCT/EP2010/051157
(87) Internationale Veröffentlichungsnummer: WO 2010/086435

(56) Entgegenhaltungen:
- DE-A1-102005 030 134
- DE-A1-102005 053 120
- DE-A1-102006 018 956
- DE-A1-102006 041 478
- DE-C1- 4 139 325

## Beschreibung

Die vorliegende Erfindung betrifft ein Verfahren zur Messung der Rußbeladung in einem Abgassystem eines Dieselmotors mit Hilfe eines einem Partikelfilter nach geschalteten, ein Sensorelement aufweisenden Sensors als Maß für die Funktionsfähigkeit des Partikelfilters, bei dem die Rußbeladung mit Hilfe eines Sensorelementes resistiv oder kapazitiv gemessen wird, wobei auf dem Sensorelement Elektroden ausgebildet sind und zwischen den Elektroden eine Messspannung angelegt wird.

Solche Rußsensoren, die in Kombination mit Partikelfiltern in den Abgassystemen von Dieselmotoren Verwendung finden, sind bekannt. Die Sensorelemente von derartigen Rußsensoren weisen beispielsweise kammförmige Elektrodenstrukturen auf. Mit zunehmender Rußbelegung der kammförmigen Elektrodenstruktur des Sensorelementes nimmt beispielsweise der elektrische Widerstand der Elektrodenstruktur ab, so dass auf diese Weise die Rußbelegung des Sensorelementes und damit der Zustand eines hiermit kombinierten Partikelfilters erfasst werden kann. Beispielsweise kann mit Hilfe eines derartigen Rußsensors der Unterschied zwischen einem intakten Partikelfilter und einem schadhaften Partikelfilter ermittelt werden.

Die Rußbelegung der kammförmigen Elektrodenstruktur oder die Rußabscheidung an dieser wird somit durch die Änderung des elektrischen Widerstandes oder Änderung der Kapazität der Elektrodenkammstruktur ermittelt und zur Beurteilung der Funktionsfähigkeit eines entsprechenden Partikelfilters benutzt.

Die DE 10 2006 018 956 A1 offenbart ein Verfahren zur Bestimmung einer Masse von Partikeln oder eines Partikelmassenstroms in einem Abgasstrang einer Brennkraftmaschine, wobei in dem Abgasstrang der Brennkraftmaschine zumindest ein resistiver Partikelsensor angeordnet ist, dessen gemessene Signaländerung mit einer aus einem Motormodell ermittelten prognostizierten Signaländerung des Partikelsensors verglichen wird.

Die DE 10 2006 041 478 A1 offenbart ein Verfahren zur Ermittlung einer Rußkonzentration in einem Abgasstrang einer Brennkraftmaschine oder einer Rußbeladung einer Abgasreinigungsanlage der Brennkraftmaschine, wobei die Rußkonzentration in dem Abgasstrang mittels eines sammelnden Partikelsensors bestimmt wird, der ein Sensorsignal abgibt, und wobei die Rußbeladung der Abgasreinigungsanlage aus der Rußkonzentration bestimmt wird. Bei dem Verfahren wird das Sensorsignal mittels vorbestimmter Korrekturen betreffend einer Sensortemperatur und/oder einer Abgastemperatur und/oder einer Strömungsgeschwindigkeit des Abgases und/oder einer an den Partikelsensor angelegten Spannung korrigiert.

Die DE 10 2005 030 134 A1 offenbart einen Sensor und ein Betriebsverfahren zur Detektion von Ruß. Der Sensor arbeitet nach einem Verfahren zur Detektion von Ruß, bei dem eine erste Betriebstemperatur am Sensor für eine Messphase eingestellt wird, so dass sich Ruß auf der Substratoberfläche ablagern kann, jedoch weitere die Rußmessung störenden Ablagerungen verhindert werden. Zudem wird die Zeit vom Messbeginn bis zum Auftreten einer erhöhten Leitfähigkeit zwischen den Elektroden aufgenommen. Danach wird eine zweite Betriebstemperatur am Sensor für eine Regenerierungsphase eingestellt, so dass der abgelagerte Ruß mit im Messgas vorhandenem Sauerstoff verbrannt wird.

Die DE 10 2005 053 120 A1 offenbart ein Sensorelement für Gassensoren und ein Verfahren zum Betrieb desselben. Das Sensorelement weist mindestens ein elektrochemisches Messelement auf, dass dem zu bestimmenden Gasgemisch ausgesetzt ist, und mindestens ein in das Sensorelement integrierte Temperaturmesselement auf. Das Temperaturmesselement umfasst eine Widerstandsleiterbahn, die einen elektrischen Widerstand von weniger als 180 Ohm bei 0 °C aufweist.

Solche Sensoren bzw. Rußsensoren sind insbesondere für die On board-Diagnose von Dieselsystemen mit Partikelfiltern vorgesehen und dienen zur Erkennung von Defekten, beispielsweise in der Filterkeramik des Partikelfilters. Da diese Sensoren keinen zusätzlichen Nutzen für das Dieselsystem darstellen, können nur Sensoren eingesetzt werden, welche die Systemkosten unwesentlich erhöhen. Der einfachste Sensortyp ist hierbei ein Keramikelement, welches im Abgas mit Ruß beladen wird. Wie erwähnt, wird hierbei diese Beladung durch Elektroden resistiv oder kapazitiv gemessen. Da jedoch die Partikelkonzentration nach dem Partikelfilter sehr niedrig ist, müssen solche Sensoren eine sehr hohe Empfindlichkeit besitzen. Die Empfindlichkeit des vorstehend erwähnten Sensortyps ist jedoch nicht ausreichend für eine derartige sehr niedrige Partikelkonzentration, zumal der Sensor beheizt werden muss, um eine Kondensation von Wasser oder anderen nichtrelevanten Flüssigkeiten zu vermeiden. Durch die erhöhte Temperatur wird sogar die Abscheiderate von Rußpartikeln auf der Sensoroberfläche verringert.

Der Einsatz von derartigen Sensoren mit resistiver oder kapazitiver Messtechnik ist daher aufgrund der geringen Empfindlichkeit mit Problemen verbunden. Man hat daher andere Sensortypen mit ausreichender Empfindlichkeit eingesetzt, die auf dem Prinzip der Aufladung und des konzentrationsabhängigen Ladungstransports beruhen. Ferner wurden optische Sensoren verwendet. Diese Konzepte haben jedoch den Nachteil, dass sie sehr aufwendig und damit sehr teuer sind. Ferner weisen auch diese Konzepte noch grundlegende technologische Probleme auf, die noch nicht gelöst sind.

Der vorliegenden Erfindung liegt die Aufgabe zugrunde, ein Verfahren zur Messung der Rußbeladung in Abgassystemen von Dieselmotoren zur Verfügung zu stellen, das bei einem geringen Aufwand eine besonders genaue Messung der Rußbeladung hinter einem Partikelfilter ermöglicht.

Diese Aufgabe wird erfindungsgemäß bei einem Verfahren der eingangs beschriebenen Art dadurch gelöst, dass die Messspannung des Sensorelementes in Abhängigkeit von mindestens einem momentanen Betriebparameter des Dieselmotors gesteuert wird.

Um die Empfindlichkeit von Sensoren mit kapazitiver oder resistiver Messtechnik zu erhöhen, kann man die Messung über die Sensorelektroden bei hoher Spannung durchführen. Hierbei wird durch die hohe Feldstärke zwischen den Elektroden erreicht, dass bereits bei einer sehr geringen Rußbeladung, wie es bei der Anordnung des Sensors nach dem Partikelfilter der Fall ist, ein messbarer Strom fließt. Da aber zur Optimierung der Sensorempfindlichkeit Elektroden, insbesondere Elektroden mit Kammstruktur, mit möglichst geringen Abständen verwendet werden, kann es aufgrund der hohen Feldstärke in der Rußschicht zu Überschlägen an den Elektroden kommen. Durch eine Erhöhung der Messspannung allein lässt sich daher das vorstehend aufgezeigte Problem nicht lösen, da es hierbei zu Zerstörungen der Elektrodenstrukturen kommen kann.

Die erfindungsgemäße Lösung basiert auf der Erkenntnis, dass die maximal mögliche Messspannung (ohne das Auftreten von Zerstörungen) nicht nur vom Rußbelag, sondern auch von Betriebsparametern des Dieselmotors, wie Abgastemperatur, Abgasfeuchtigkeit etc., abhängig ist. Die Messspannung wird daher erfindungsgemäß in Abhängigkeit von mindestens einem momentanen Betriebsparameter des Dieselmotors gesteuert, so dass auf diese Weise eine gewünschte Erhöhung der Messempfindlichkeit des Sensors erreicht wird und gleichzeitig Zerstörungen vermieden werden. Eine derartige Steuerung der Messspannung des Sensorelementes in Abhängigkeit von mindestens einem momentanen Betriebsparameter ist möglich und erfordert nur wenig Zusatzaufwand, da der Sensor für die Auswertung des Messwertes und für die Steuerung der Regenerierung der Oberfläche des Sensorelementes ohnehin die Motorbetriebsdaten benötigt.

Bei dem erfindungsgemäßen Verfahren wird daher der Einfluss von mindestens einem Betriebsparameter auf die Messtechnik berücksichtigt. Die Messspannung wird entsprechend angepasst, so dass sich eine erhöhte Empfindlichkeit des Sensors ergibt, ohne dass die Gefahr von Zerstörungen besteht.

Vorteilhafterweise wird die Messspannung des Sensorelementes in Abhängigkeit von mehreren momentanen Betriebsparametern des Dieselmotors gesteuert.

Bei einer besonders bevorzugten Ausführungsform des erfindungsgemäßen Verfahrens wird aus dem mindestens einen momentanen Betriebsparameter des Dieselmotors die Abgasfeuchtigkeit und/oder Abgastemperatur berechnet und hieraus die optimale Messspannung des Sensorelementes gewonnen.

Im Rahmen einer Ausgestaltung der Erfindung wird aus dem Strommesswert des Sensorselementes ein Wert für die Rußbeladung ermittelt und über den zeitlichen Verlauf des Strommesswertes ein Wert für die Rußkonzentration im Abgas gewonnen.

Erfindungsgemäß werden vorzugsweise Elektroden mit Kammstruktur verwendet. Hierdurch lässt sich die Messempfindlichkeit des Sensors steigern.

Mit dem erfindungsgemäßen Verfahren kann ein Sensor realisiert werden, welcher bei kleinster Bauform und einfachem Messprinzip ohne hohe Anforderungen an die Elektronik in Empfindlichkeitsbereichen angewendet werden kann, welche bisher nur optischen Systemen oder Ladungstransportprinzipien vorbehalten waren.

Die vorliegende Erfindung betrifft ferner eine Vorrichtung zur Messung der Rußbeladung in Abgassystemen von Dieselmotoren mit einem Partikelfilter und einem dem Partikelfilter nach geschalteten Sensor, dessen Sensorelement die Rußbeladung mit Hilfe von Elektroden resistiv oder kapazitiv misst, wobei die Elektroden auf dem Sensorelement ausgebildet sind und zwischen den Elektroden eine Messspannung angelegt ist, und eine Sensorelektronik dem Strom, der über die Elektroden des Sensorelementes fließt, misst und aus diesem Strommesswert einen Wert für die Rußbeladung bzw. Rußkonzentration im Abgas ermittelt. Diese Vorrichtung ist erfindungsgemäß dadurch gekennzeichnet, dass die Sensorelektronik die zwischen den Elektroden angelegte Messspannung des Sensorelementes in Abhängigkeit von mindestens einem momentanen Betriebsparameter des Dieselmotors steuert. Dies hat den Vorteil, dass Spannungsüberschläge durch ungewollte Ablagerungen auf den Elektroden vermieden werden und damit der Sensor vor einer Zerstörung durch solche Spannungsüberschläge und den damit verbundenen hohen Strömen effektiv geschützt wird.

Die Sensorelektronik steht vorzugsweise über eine bidirektionale Schnittstelle mit dem Motorsteuergerät in Verbindung, um eine derartige Steuerung der Messspannung zu ermöglichen.

Was das Sensorelement anbetrifft, so weist dieses vorzugsweise Elektroden mit Kammstruktur auf, die in einem geringen Abstand voneinander angeordnet sind. Ferner besitzt das Sensorelement vorzugsweise eine Heizeinrichtung, die zum Beheizen des Sensorelementes dient, um eine Kondensation von Wasser oder anderen nichtrelevanten Flüssigkeiten zu vermeiden. Das Sensorelement besteht vorzugsweise aus einer geeigneten Keramik. Es ist zweckmäßigerweise über ein Einschraubgehäuse im Abgassystem befestigt.

Bei einer besonders bevorzugten Ausführungsform der erfindungsgemäßen Vorrichtung setzt sich der Sensor aus dem Sensorelement, einem hochtemperaturtauglichen Einschraubgehäuse und der Sensorelektronik zusammen, wobei das Einschraubgehäuse über eine Kabelverbindung an die Sensorelektronik angeschlossen ist, vorzugsweise über einen kurzen Kabelschwanz. Das Sensorelement trägt hierbei auf einem Keramikstreifen die Interdigitalstruktur (Kammstruktur) der Messelektroden sowie eine Heizerstruktur (Heizvorrichtung), welche das Sensorelement auf eine definierte Messtemperatur bringt und zur Regenerierung der Sensoroberfläche auch Temperaturen bis 800°C erzeugen kann. Die auf erfindungsgemäße Weise angepasste Messspannung, die Strommessung und die Temperaturregelung werden von der Sensorelektronik bereitgestellt bzw. übernommen. Wie erwähnt, steht die Sensorelektronik über eine bidirektionale Schnittstelle mit dem Motorsteuergerät in Verbindung. Aus Daten (Betriebsparametern), welche in der Motorsteuerung vorliegen und über die Schnittstelle zur Sensorelektrode übertragen werden, kann die Sensorelektronik beispielsweise die Temperatur und Feuchtigkeit des Abgases berechnen und die optimale Messspannung bereitstellen. Der Strommesswert wird in einen Wert für die Rußbeladung umgerechnet und über den zeitlichen Verlauf des Strommesswertes ein Wert für die Rußkonzentration im Abgas berechnet.

Die Erfindung wird nachfolgend anhand eines Ausführungsbeispiels in Verbindung mit den Zeichnungen im Einzelnen erläutert.
- Figur 1: zeigt den schematischen Aufbau einer Vorrichtung zur Messung der Rußbeladung in einem Abgassystem eines Dieselmotors.
- Figur 2: zeigt das in Figur 1 eingeführte Sensorelement in einer detaillierten Darstellung.

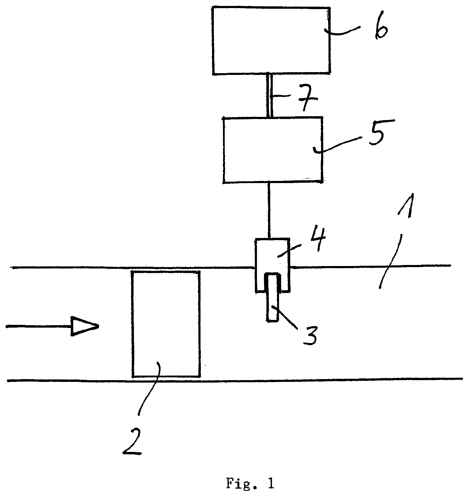

Die Figur 1 zeigt schematisch einen Abgaskanal 1 eines Dieselmotors, in dem ein Partikelfilter 2 angeordnet ist. Die Strömungsrichtung des Abgases ist durch einen Pfeil angedeutet.

Um die Funktionsfähigkeit des Partikelfilters 2 zu überwachen, ist in Strömungsrichtung nach dem Partikelfilter 2 im Abgaskanal 1 ein Sensorelement 3 angeordnet, das in einem hochtemperaturtauglichen Einschraubgehäuse 4 angeordnet ist. Das Einschraubgehäuse 4 steht über eine geeignete Kabelverbindung mit einer Sensorelektronik 5 in Verbindung, welche über eine bidirektionale Schnittstelle 7 an das Steuergerät 6 des Dieselmotors angeschlossen ist.

Das Sensorelement 3 des aus dem Sensorelement 3, dem Einschraubgehäuse 4 und der Sensorelektronik 5 bestehenden Rußsensors weist auf einem Keramikstreifen eine Interdigitalstruktur (Kammstruktur) von Messelektroden und eine Heizerstruktur auf. Der Aufbau eines derartigen Sensorelementes ist grundsätzlich bekannt und muss an dieser Stelle nicht mehr im Einzelnen erörtert werden. Durch die Rußbeladung auf oder an der Elektrodenstruktur fließt ein messbarer Strom, wobei von der Messelektronik 5 der Strommesswert in einen Wert für die Rußbeladung umgerechnet wird. Über den zeitlichen Verlauf des Strommesswertes wird ein Wert für die Rußkonzentration im Abgas berechnet. Aus diesem Wert kann auf die Funktionsfähigkeit des Partikelfilters 2 geschlossen werden.

Die erforderliche Messspannung für das Sensorelement 3 wird von der Sensorelektronik 5 zur Verfügung gestellt, und zwar in Abhängigkeit von Betriebsparametern des Dieselmotors. Hierzu steht die Sensorelektronik über eine bidirektionale Schnittstelle 7 mit dem entsprechenden Motorsteuergerät 6 in Verbindung. Aus Daten für die entsprechenden Betriebsparameter, welche in der Motorsteuerung vorliegen und über die Schnittstelle zur Sensorelektronik übertragen werden, kann die Sensorelektronik 5 beispielsweise die Feuchtigkeit und die Temperatur des Abgases berechnen und die optimale Messspannung für das Sensorelement 3 bereitstellen. Auf diese Weise wird sichergestellt, dass das Sensorelement 3 eine hohe Messempfindlichkeit besitzt und selbst bei einer geringen Beladung mit Rußpartikeln einen messbaren Strom liefert, ohne dass die Gefahr von Zerstörungen der Elektrodenstruktur durch Überschläge besteht.

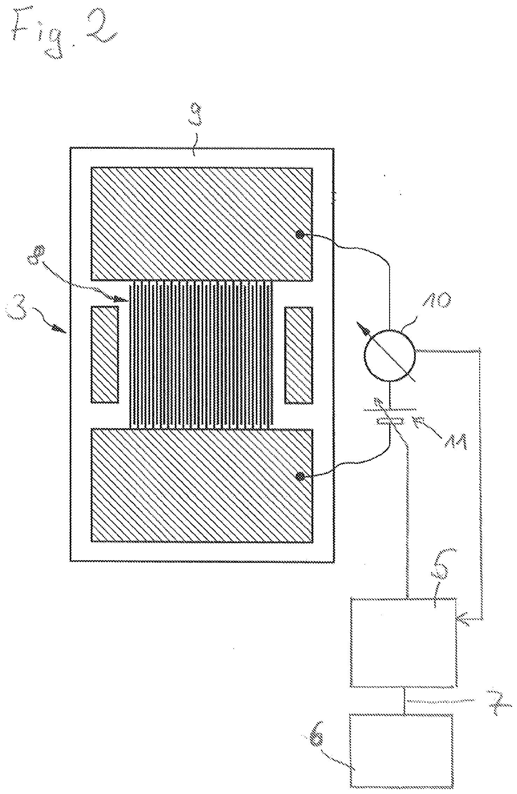

Figur 2 zeigt das in Figur 1 eingeführte Sensorelement 3 in einer detaillierten Darstellung. Zu erkennen ist das Sensorelement, das als Keramikstreifen 9 ausgebildet ist und darauf angeordnete Elektroden 8. Die Elektroden 8 sind hier als interdigitale Kammstruktur ausgebildet. Die Messspannung des Sensorelementes 3 wird zwischen den Elektroden 8 angelegt. Damit entsteht zwischen den interdigitalen Elektroden ein elektrisches Feld. Setzen sich nun zum Beispiel in einer Warmlaufphase des Verbrennungsmotors Wasserpartikel zwischen den interdigital ineinandergreifenden Elektroden 8 ab, so kann die Feldstärke zwischen den Elektroden 8 derart erhöht werden, dass es zu Spannungsüberschlägen zwischen den Elektroden 8 kommt, bei denen der über die Elektroden 8 fließende Strom so hoch wird, dass die Elektrodenstruktur zerstört wird. Dies gilt es zu verhindern, indem mit der steuerbaren Spannungsquelle 11 die zwischen den Elektroden angelegte Messspannung des Sensorelementes 3 in Abhängigkeit von mindestens einen momentanen Betriebsparameter des Dieselmotors gesteuert wird. In diesem Beispiel wird die Messspannung zunächst niedrig gehalten. Wenn der Dieselmotor jedoch seine Betriebstemperatur erreicht hat, und der Abgasstrom auf Grund der hohen Temperatur weitgehend frei von Feuchtigkeit ist, kann mit Hilfe der steuerbaren Spannungsquelle 11 die Messspannung des Sensorelementes 3 wesentlich erhöht werden, womit der Rußsensor deutlich empfindlicher für die zu messenden Rußpartikel wird. Die zwischen den Elektroden 8 angelegte Messspannung wird also in Abhängigkeit von den momentanen Betriebsparametern des Dieselmotors gesteuert. Diese Steuerung findet mit Hilfe der Sensorelektronik 5 und des Steuergerätes 6 des Dieselmotors statt.

Mit Hilfe des Strommesselementes 10 wird zur Auswertung der Rußbeladung im Abgassystem der elektrische Strom, der über die Elektroden 8 fließt, gemessen. Auch das Strommesselement 10 kann zur Beeinflussung der steuerbaren Spannungsquelle 11 genutzt werden. Wenn zum Beispiel auf Grund der Ablagerung von Feuchtigkeit auf den Elektroden 8 ein Spannungsüberschlag zwischen den Elektroden 8 stattfindet und damit ein sehr hoher elektrischer Strom vom Strommesselement 10 gemessen wird, kann diese Information von der Sensorelektronik 5 aufgenommen und verarbeitet werden, wodurch die steuerbare Spannungsquelle 11 so eingestellt werden kann, dass es zu keinen weiteren Spannungsüberschlägen mehr kommt. Dies sichert einen nachhaltigen und langlebigen Betrieb des Rußsensors, da die interdigital ineinandergreifenden Elektroden 8 vor Zerstörung geschützt werden. Spannungen und Ströme sind im Kontext dieser Patentanmeldung immer als elektrischen Spannungen und elektrischen Ströme zu verstehen.

## Patentansprüche

1. Verfahren zur Messung der Rußbeladung in einem Abgassystem eines Dieselmotors mit Hilfe eines einem Partikelfilter (2) nach geschalteten, ein Sensorelement(3) aufweisenden Sensors als Maß für die Funktionsfähigkeit des Partikelfilters (2), bei dem die Rußbeladung mit Hilfe eines Sensorelementes (3) resistiv oder kapazitiv gemessen wird, wobei auf dem Sensorelement (3) Elektroden (8) ausgebildet sind und zwischen den Elektroden (8) eine Messspannung angelegt wird, **dadurchgekennzeichnet,** dass die zwischen den Elektroden (8) angelegte Messspannung in Abhängigkeit von mindestens einem momentanen Betriebsparameter des Dieselmotors gesteuert wird.

2. Verfahren nach Anspruch 1, **dadurch gekennzeichnet, dass** aus dem mindestens einen momentanen Betriebsparameter des Dieselmotors die Abgasfeuchtigkeit und/oder Abgastemperatur berechnet und hieraus die optimale Messspannung des Sensorelementes (3) gewonnen wird.

3. Verfahren nach Anspruch 1 oder 2, **dadurch gekennzeichnet, dass** aus dem Strom, der über die Elektroden (8) des Sensorelementes (3) gemessen wird, ein Wert für die Rußbeladung ermittelt und über den zeitlichen Verlauf des Strommesswertes ein Wert für die Rußkonzentration im Abgas gewonnen wird.

4. Verfahren nach einem der vorangehenden Ansprüche, **dadurch gekennzeichnet, dass** das Sensorelement (3) Elektroden (8) mit einer interdigitalen Kammstruktur aufweist.

5. Vorrichtung zur Messung der Rußbeladung in Abgassystemen von Dieselmotoren mit einem Partikelfilter (2) und einem dem Partikelfilter (2) nachgeschalteten Sensor, dessen Sensorelement (3) ausgestaltet ist, die Rußbeladung mit Hilfe von Elektroden (8) resistiv oder kapazitiv zu messen, wobei die Elektroden (8) auf dem Sensorelement (3) ausgebildet sind und zwischen den Elektroden (8) eine Messspannung angelegt werden kann, und eine Sensorelektronik (5) ausgestaltet ist, den Strom, der über die Elektroden (8) des Sensorelementes (3) fließt, zu messen
und aus diesem Strommesswert einen Wert für die Rußbeladung bzw. Rußkonzentration im Abgas zu ermitteln, **dadurch gekennzeichnet, dass** die Sensorelektronik (5) ausgestaltet ist, die zwischen den Elektroden angelegte Messspannung des Sensorelementes (3) in Abhängigkeit von mindestens einem momentanen Betriebsparameter des Dieselmotors zu steuern, wobei die Sensorelektronik (5) über eine bidirektionale Schnittstelle (7) mit dem Motorsteuergerät (6) in Verbindung steht.

6. Vorrichtung nach Anspruch 5, **dadurch gekennzeichnet, dass** das Sensorelement (3) Elektroden mit Kammstruktur aufweist.

7. Vorrichtung nach einem der Ansprüche 5 bis 6, **dadurch gekennzeichnet, dass** das Sensorelement (3) eine Heizeinrichtung aufweist.

8. Vorrichtung nach einem der Ansprüche 5 bis 7, **dadurch gekennzeichnet, dass** das Sensorelement (3) über ein Einschraubgehäuse (4) im Abgassystem befestigt ist.

## Claims

1. Method for measuring the soot load in an exhaust gas system of a diesel engine using a sensor, connected downstream of a particle filter (2) and having a sensor element (3), as a measure of the functional capability of the particle filter (2), in which the soot load is measured resistively or capacitively using a sensor element (3), wherein electrodes (8) are formed on the sensor element (3) and a measurement voltage is applied between the electrodes (8), **characterized in that** the measurement voltage which is applied between the electrodes (8) is controlled as a function of at least one instantaneous operating parameter of the diesel engine.

2. Method according to Claim 1, **characterized in that** the moisture of the exhaust gas and/or the temperature of the exhaust gas is calculated on the basis of the at least one instantaneous operating parameter of the diesel engine, and the optimum measurement voltage of the sensor element (3) is acquired therefrom.

3. Method according to Claim 1 or 2, **characterized in that** a value for the soot load is determined from the current which is measured across the electrodes (8) of the sensor element (3), and a value for the soot concentration in the exhaust gas is acquired over the time profile of the measured current value.

4. Method according to one of the preceding claims, **characterized in that** the sensor element (3) has electrodes (8) with an inter-digital comb structure.

5. Device for measuring the soot load in exhaust gas systems of diesel engines having a particle filter (2) and a sensor which is connected downstream of the particle filter (2) and whose sensor element (3) is configured to resistively or capacitively measure the soot load using electrodes (8), wherein the electrodes (8) are formed on the sensor element (3) and a measurement voltage can be applied between the electrodes (8), and sensor electronics (5) are configured to measure the current which flows across the electrodes (8) of the sensor element (3) and to determine a value for the soot load or soot concentration in the exhaust gas from this measured current value, **characterized in that** the sensor electronics (5) are configured to control the measurement voltage, applied between the electrodes, of the sensor element (3) as a function of at least one instantaneous operating parameter of the diesel engine, wherein the sensor electronics (5) are connected to the engine control unit (6) via a bidirectional interface (7).

6. Device according to Claim 5, **characterized in that** the sensor element (3) has electrodes with a comb structure.

7. Device according to either of Claims 5 and 6, **characterized in that** the sensor element (3) has a heating device.

8. Device according to one of Claims 5 to 7, **characterized in that** the sensor element (3) is attached in the exhaust gas system by means of a screw-in housing (4).

## Revendications

1. Procédé de mesure de la charge en suie dans un système de gaz d'échappement d'un moteur diesel à l'aide d'un capteur placé en aval d'un filtre à particules (2) et comportant un élément de capteur (3) servant d'indicateur de la capacité de fonctionnement du filtre à particules (2), dans lequel la charge en suies est mesurée de manière résistive ou capacitive à l'aide d'un élément de capteur (3), dans lequel des électrodes (8) sont réalisées sur l'élément de capteur (3) et une tension de mesure est appliquée entre les électrodes (8), **caractérisé en ce que** la tension de mesure appliquée entre les électrodes (8) est commandée en fonction d'au moins un paramètre de fonctionnement instantané du moteur diesel.

2. Procédé selon la revendication 1, **caractérisé en ce que** l'humidité des gaz d'échappement et/ou la température des gaz d'échappement est calculée à partir dudit au moins un paramètre de fonctionnement instantané du moteur diesel et **en ce que** la tension de mesure optimale de l'élément de capteur (3) est obtenue à partir de celle-ci.

3. Procédé selon la revendication 1 ou 2, **caractérisé en ce qu'**une valeur de la charge en suies est déterminée à partir du courant qui est mesuré par l'intermédiaire des électrodes (8) de l'élément de capteur (3) et **en ce qu'**une valeur de la concentration en suies dans les gaz d'échappement est obtenue par l'intermédiaire de l'évolution temporelle de la valeur de mesure du courant.

4. Procédé selon l'une des revendications précédentes, **caractérisé en ce que** l'élément de capteur (3) comprend des électrodes (8) présentant une structure en peigne interdigitée.

5. Dispositif de mesure de la charge en suies dans des systèmes de gaz d'échappement de moteurs diesel, comprenant un filtre à particules (2) et un capteur placé en aval du filtre à particules (2), dont l'élément de capteur (3) est conçu pour mesurer la charge en suies de manière résistive ou capacitive à l'aide d'électrodes (8), dans laquelle les électrodes (8) sont formées sur l'élément de capteur (3) et une tension de mesure peut être appliquée entre les électrodes (8), et une électronique de capteur (5) est conçue pour mesurer le courant passant dans les électrodes (8) de l'élément de capteur (3) et pour déterminer à partir de ladite valeur de mesure de courant une valeur de la charge en suies ou de la concentration en suies des gaz d'échappement, **caractérisé en ce que** l'électronique de capteur (5) est conçue pour commander la tension de mesure de l'élément de capteur (3) qui est appliqués entre les électrodes en fonction d'au moins un paramètre de fonctionnement instantané du moteur diesel, dans lequel l'électronique de capteur (5) est reliée à l'unité de commande de moteur (6) par l'intermédiaire d'une interface bidirectionnelle (7).

6. Dispositif selon la revendication 5, **caractérisé en ce que** l'élément de capteur (3) comporte des électrodes présentant une structure en peigne.

7. Dispositif selon l'une des revendications 5 à 6, **caractérisé en ce que** l'élément de capteur (3) comprend un dispositif de chauffage.

8. Dispositif selon l'une des revendications 5 à 7, **caractérisé en ce que** l'élément de capteur (3) est fixé dans le système de gaz d'échappement par l'intermédiaire d'un boîtier vissé (4).
